# EUROPÄISCHE PATENTSCHRIFT

(11) **EP 3 197 631 B1**
(45) Veröffentlichungstag und Bekanntmachung des Hinweises auf die Patenterteilung: **13.06.2018**
(21) Anmeldenummer: 15759679.2
(22) Anmeldetag: 19.08.2015
(51) Int. Cl.: B23K 11/00, B23K 101/00, B23K 103/04, B23K 35/02, F16B 37/06

(54) **BEFESTIGUNGSSYSTEM UND VERFAHREN ZUR HERSTELLUNG EINES BEFESTIGUNGSSYSTEMS**
FASTENING SYSTEM AND METHOD FOR PRODUCING A FASTENING SYSTEM
SYSTÈME DE FIXATION ET PROCEDE DE FABRICATION D'UN SYSTÈME DE FIXATION

(30) Priorität: 25.09.2014 DE 102014219372
(43) Veröffentlichungstag der Anmeldung: 02.08.2017
(73) Patentinhaber: Bayerische Motoren Werke Aktiengesellschaft, 80809 München (DE)
(72) Erfinder: BRAUN, Paul, 85283 Wolnzach (DE); KURZMAIER, Ludwig, 83536 Gars am Inn (DE)
(86) Internationale Anmeldenummer: PCT/EP2015/069032
(87) Internationale Veröffentlichungsnummer: WO 2016/045880

(56) Entgegenhaltungen:
- DE-A1-102005 017 379
- DE-B3-102009 044 495
- FR-A1- 2 650 037

## Beschreibung

Es wird ein Befestigungssystem angegeben. Ein derartiges Befestigungssystem kann beispielsweise an einem Träger, wie z.B. an einem Teil einer Karosserie befestigt sein. Weiterhin wird ein Verfahren zur Herstellung eines Befestigungssystems angegeben.

Auf dem Gebiet der Fügetechnik ist es bekannt, Bolzen auf die Oberfläche von Werkstücken, wie z.B. auf Karosserieteile, zu fügen. Hierunter fällt das sogenannte Bolzenschweißen, bei dem ein Bolzen mit der Oberfläche eines Werkstückes verschweißt wird. Alternative Fügetechniken beinhalten beispielsweise das Kleben eines Bolzens auf die Oberfläche eines Werkstückes.

Im Fahrzeugbau werden vorwiegend Schweißbolzen verwendet, die in einem Schweißvorgang auf einem Karosserieteil befestigt werden, wobei der Schweißbolzen mit seinem Kopf an das Karosserieteil angeschweißt wird und anschließend Bauteile mittels Muttern oder Klammern am Schaft des Schweißbolzens befestigt werden. Der Flansch des Schweißbolzens bildet hierbei das Widerlager, an welchem sich die auf dem Schaft angeordneten Bauteile abstützen. Von der Größe des Flansches hängt daher die maximale Größe der den Schaft umgebenden Öffnung des Bauteils ab, da bei zu großer Öffnung im Vergleich zur Größe des Flansches eine ausreichende Abstützung des Bauteils an dem Flansch nicht mehr gewährleistet ist. Weiterhin bestimmt die Größe der den Schaft umgebenden Öffnung des anzubringenden Bauteils auch die größtmögliche Lageabweichung, die das Bauteil relativ zum Schweißbolzen haben darf. Sollen große Lageabweichungen zugelassen werden, so erfordert dies eine entsprechend große Öffnung und einen großen Flansch. Die Druckschrift DE 10 2005 017 379 A1 offenbart ein Befestigungselement, bei dem zur Vergrößerung der Auflagefläche eine Unterlegscheibe vorgesehen ist, die zwischen dem Kopf und dem Außengewinde des Schafts eines Schweißbolzens unlösbar verbunden ist. Bei der Herstellung eines derartigen Befestigungselements wird aus einem Drahtabschnitt ein Schweißbolzen mit Kopf und glattem Schaft mittels Kaltumformen geformt. Anschließend wird die Unterlegscheibe auf den glatten Schaft des Schweißbolzens aufgebracht und danach wird auf den Schaft des Schweißbolzens ein Außengewinde gewalzt.

Bolzenschweißprozesse werden häufig automatisiert durchgeführt, insbesondere in der Kraftfahrzeugindustrie, wo eine Vielzahl von Schweißbolzen auf ein Fahrzeugblech gefügt wird, um Anker für Befestigungsmittel, Verkleidung etc. zu schaffen. Das automatisierte Fügen von Bolzen auf Werkstücke wird z.B. von einem oder mehreren Robotern, welche jeweils einen Fügekopf aufweisen, durchgeführt. Der Fügekopf des Roboters ist dabei mit einer Versorgungseinrichtung verbunden, die beispielsweise den elektrischen Schweißstrom und sonstige Steuersignale bereitstellt. Weiterhin ist es bevorzugt, die Bolzen dem Fügekopf automatisiert zuzuführen. Dies erfolgt in der Regel durch Pressluft durch Zuführschläuche hindurch. Der Durchmesser der Zuführschläuche ist dabei in der Regel nur ein wenig größer als der Durchmesser der Flanschabschnitte der Bolzen, um einen leichtgängigen Transport des Bolzens zu ermöglichen. Insbesondere bei einem Einsatz von mehreren Schweißrobotern an einem Werkstück können die Bolzen nur mit einer Genauigkeit von in etwa 2,5 mm gesetzt werden und häufig geforderte Genauigkeiten von unter 1,5 mm werden nicht erreicht.

Bekannte Befestigungselemente haben somit den Nachteil, dass sie entweder relativ kleine Auflageflächen aufweisen, die sich nicht dazu eignen, Toleranzen auszugleichen, oder aber, beispielsweise im Falle von Schweißbolzen mit unlösbar verbundenen Unterlegscheiben, aufgrund der Größe der Unterlegscheiben nicht mehr in vollautomatisierten Prozessen unter Einsatz von Schweißrobotern verwendet werden können. Dies liegt insbesondere daran, dass oftmals die Zuführschläuche zum Fügekopf des Roboters aufgrund ihrer Durchmesser nicht dazu geeignet sind, derartige Schweißbolzen mit daran befestigten Unterlegscheiben zu transportieren.

Es ist eine zu lösende Aufgabe zumindest einiger Ausführungsformen, ein Befestigungssystem anzugeben, das einerseits ein großflächiges Widerlager für zu befestigende Bauteile aufweist und andererseits sich dazu eignet, in einem automatisierten Schweißvorgang mittels eines Roboters verwendet zu werden. Eine weitere Aufgabe zumindest einiger Ausführungsformen ist es, ein Verfahren zur Herstellung eines Befestigungssystems anzugeben.

Diese Aufgaben werden durch einen Gegenstand und ein Verfahren gemäß den unabhängigen Patentansprüchen gelöst. Vorteilhafte Ausführungsformen und Weiterbildungen der Gegenstände gehen weiterhin aus den abhängigen Patentansprüchen, der nachfolgenden Beschreibung und aus den Zeichnungen hervor.

Ein Befestigungssystem gemäß zumindest einer Ausführungsform weist einen auf einen Träger aufschweißbaren Schweißbolzen auf. Bei dem Träger kann es sich beispielsweise um eine Karosserie oder einen Teil einer Karosserie handeln. Der Schweißbolzen weist vorzugsweise einen Anschweißabschnitt zum Anschweißen des Schweißbolzens an den Träger, einen Flansch und einen stiftförmigen Abschnitt, der ein Außengewinde umfasst, auf. Beispielsweise kann es sich bei dem Schweißbolzen um einen sogenannten Großflanschbolzen handeln, der in einem vollautomatisierten Schweißprozess benutzt werden kann. Der Schweißbolzen weist vorzugsweise mindestens eine Festigkeit der Festigkeitsklasse 6,8 auf. Besonders bevorzugt weist der Schweißbolzen eine Festigkeit der Festigkeitsklasse 8,8 auf. Der Schweißbolzen kann z.B. eine Länge von 22 mm in axialer Richtung aufweisen und der stiftförmige Abschnitt eine Länge von 13 mm.

Das Befestigungssystem umfasst weiterhin eine an dem Schweißbolzen befestigte Scheibe, die eine Öffnung aufweist. Vorzugsweise ist die Scheibe derart am Schweißbolzen befestigt, dass sie mittels ihrer Öffnung auf den Schweißbolzen aufgesteckt ist und der stiftförmige Abschnitt des Schweißbolzens durch die Öffnung ragt. Weiterhin wird bevorzugt, dass die Scheibe einen Außendurchmesser aufweist, der größer ist als ein Durchmesser des Flansches des Schweißbolzens. Dadurch kann eine Auflagefläche des Schweißbolzens vorteilhafterweise vergrößert werden. Der stiftförmige Abschnitt weist einen zwischen dem Flansch und dem Außengewinde angeordneten gewindefreien Bereich auf. Der gewindefreie Bereich erstreckt sich somit vom Flanschende bis zum Beginn des Außengewindes des Schweißbolzens. Die Scheibe weist Einrastmittel auf, die zum Aufschieben der Scheibe über das Außengewinde ausgebildet sind und mittels derer die Scheibe im gewindefreien Bereich eingerastet ist.

Vorteilhafterweise können mittels der im gewindefreien Bereich des Schweißbolzens eingerasteten Scheibe unerwünschte Toleranzen, wie sie beispielsweise aufgrund eines Einsatzes mehrerer Roboter an einem Träger auftreten, ausgeglichen werden. Die Scheibe wird nach dem Einrasten im gewindefreien Bereich des stiftförmigen Abschnitts vorzugsweise zumindest so fest gehalten, dass sie durch Kräfte, die auf die Scheibe wirken und die in ihrer Größenordnung in etwa der Gewichtskraft der Scheibe entsprechen, nicht vom stiftförmigen Abschnitt gezogen werden kann. Dadurch kann z.B. verhindert werden, dass die Scheibe bei einer Drehung des Trägers, wie sie beispielsweise in der Schwenkmontage oder bei der kathodischen Tauchlackierung auftreten kann, vom Schweißbolzen abfallen kann.

Gemäß einer weiteren Ausführungsform sind die Einrastmittel verformbar. Beispielsweise können die Einrastmittel elastisch verformbar sein. Das bedeutet, dass die Einrastmittel nach einer Verformung wieder in ihren ursprünglichen Zustand zurückkehren können. Weiterhin ist es auch möglich, dass die Einrastmittel zumindest teilweise plastisch verformbar sind. Dies bedeutet, dass die Einrastmittel nach einer Verformung zumindest teilweise in ihrem verformten Zustand bleiben können.

Beispielsweise weist die Öffnung der Scheibe einen Durchmesser zwischen 5,0 mm und 7,0 mm, bevorzugt von 6,0 mm auf. Das Außengewinde weist gemäß einer bevorzugten Ausführungsform einen größeren Durchmesser auf als die Öffnung der Scheibe. Insbesondere kann die größte Ausdehnung des Außengewindes in radialer Richtung, d.h. in einer zur axialen Richtung des stiftförmigen Abschnitts senkrechten Richtung, größer sein als der Durchmesser der Öffnung der Scheibe.

Gemäß einer weiteren Ausführungsform weist die Scheibe einen Innenbereich und einen Außenbereich auf. Der Innenbereich grenzt vorzugsweise direkt an die Öffnung der Scheibe an. Der Außenbereich grenzt vorzugsweise direkt an den die Öffnung umgebenden Innenbereich an. Vorzugsweise weisen der Innenbereich und der Außenbereich der Scheibe ein voneinander verschiedenes Material auf. Beispielsweise kann der der Außenbereich ein Metall und der Innenbereich ein elastisches Material umfassen. Gemäß einer bevorzugten Ausführungsform weist der Innenbereich ein Kunststoffmaterial auf und der Außenbereich weist ein Metall, beispielsweise Stahl, auf. Dabei bildet der Innenbereich der Scheibe die Einrastmittel der Scheibe, mittels derer die Scheibe im gewindefreien Bereich einrasten kann. Insbesondere kann mittels des das Kunststoffmaterial aufweisenden Innenbereichs die Scheibe über das Außengewinde des Schweißbolzens geschoben werden und danach fest im gewindefreien Bereich gehalten werden. Gemäß einer besonders bevorzugten Ausführungsform besteht der Innenbereich aus einem Kunststoffmaterial und der Außenbereich besteht aus einem Metall. Der Innenbereich kann auch Kautschuk aufweisen oder daraus bestehen.

Gemäß einer weiteren Ausführungsform besteht die Scheibe aus einem Kunststoffmaterial. Vorzugsweise ist das Kunststoffmaterial hitzebeständig bis 200 °C für einen Zeitraum von mindestens 30 Minuten. Weiterhin kann die Scheibe aus Kautschuk bestehen.

Gemäß einer weiteren Ausführungsform weist die Scheibe in Richtung der Öffnung vorsprungartige Klemmabschnitte auf. Die Klemmabschnitte bilden dabei die Einrastmittel der Scheibe. Vorzugsweise umfasst die Scheibe zumindest zwei vorsprungartige Klemmabschnitte, die in radialer Richtung in Richtung der Öffnung ragen. Weiterhin kann die Scheibe genau zwei vorsprungartige Klemmabschnitte aufweisen. Bevorzugt weist die Scheibe drei vorsprungartige Klemmabschnitte auf. Besonders bevorzugt weist die Scheibe vier vorsprungartige Klemmabschnitte auf. Weiterhin ist es möglich, dass die Scheibe mehr als vier vorsprungartige Klemmabschnitte umfasst. Mittels der Klemmabschnitte kann die Scheibe über das Außengewinde geschoben werden und im gewindefreien Bereich des stiftförmigen Abschnitts einrasten.

Vorzugsweise weist die Scheibe keinen Gewindeabschnitt auf, insbesondere auch nicht im Bereich der Öffnung der Scheibe. Somit handelt es sich bei der Scheibe vorzugsweise nicht um eine Schraubenmutter mit einem Innengewinde.

Gemäß einer weiteren Ausführungsform sind der Anschweißabschnitt, der Flansch und der stiftförmige Abschnitt des Schweißbolzens einstückig ausgebildet. Vorzugsweise ist der Schweißbolzen komplett fertiggestellt, d.h. der Anschweißabschnitt, der Flansch und der das Außengewinde und den gewindefreien Bereich umfassende stiftförmige Abschnitt sind vollständig ausgebildet, wenn die Scheibe mit dem Schweißbolzen verbunden wird. Beispielsweise kann der Schweißbolzen Stahl aufweisen oder aus Stahl bestehen und verzinkt sein.

Gemäß einer weiteren Ausführungsform ist die Länge des gewindefreien Bereichs größer oder gleich der Dicke der Scheibe. Das heißt, dass der gewindefreie Bereich in axialer Richtung, d.h. der Abstand von Flanschende bis zum Beginn des Außengewindes in axialer Richtung, vorzugsweise größer oder gleich der Dicke der Scheibe ist. Beispielsweise kann die Scheibe, insbesondere wenn gewindefreie Bereich in axialer Richtung länger ist als die Dicke der Scheibe, schwimmend zwischen dem Flansch und dem Außengewinde gelagert sein. In anderen Worten ist die Scheibe dann derart zwischen dem Flansch und dem Außengewinde eingerastet, dass sie beweglich im gewindefreien Bereich zwischen dem Flansch und dem Außengewinde angeordnet ist. Weiterhin ist es jedoch auch möglich, dass die Scheibe fest im gewindefreien Bereich zwischen dem Flansch und dem Außengewinde angeordnet ist, beispielsweise wenn die Länge des gewindefreien Bereichs in axialer Richtung gleich der Dicke der Scheibe ist. Die Dicke der Scheibe beträgt z.B. zwischen 0,5 mm und 1,5 mm, gemäß einer bevorzugten Ausführungsform 1,0 mm.

Gemäß einer weiteren Ausführungsform ist das Verhältnis vom Außendurchmesser der Scheibe zum Durchmesser des Flansches mindestens 1,5. Gemäß einer weiteren bevorzugten Ausführungsform beträgt das Verhältnis vom Außendurchmesser der Scheibe zum Durchmesser des Flansches mindestens 1,7. Dadurch kann vorteilhafterweise eine ausreichend große Auflagefläche des Befestigungssystems für daran zu befestigende Bauteile erzielt werden. Vorzugsweise ist die Größe des Außendurchmessers der Scheibe an eine Anlagefläche eines am Träger zu befestigenden Anbauteils angepasst. Die Scheibe weist beispielsweise einen Außendurchmesser zwischen 20 mm und 25 mm auf.

Weiterhin wird ein Verfahren zur Herstellung eines Befestigungssystems angegeben. Das dadurch herstellbare oder hergestellte Befestigungssystem kann eines oder mehrere Merkmale der vorgenannten Ausführungsformen aufweisen. Die vorher und im Folgenden beschriebenen Ausführungsformen gelten gleichermaßen für das Befestigungssystem wie auch für das Verfahren zur Herstellung des Befestigungssystems.

Gemäß einer Ausführungsform werden zur Herstellung des Befestigungssystems in einem ersten Verfahrensschritt ein Träger, ein Schweißbolzen, der einen Flansch und einen ein Außengewinde aufweisenden stiftförmigen Abschnitt umfasst, sowie eine Scheibe, die eine Öffnung aufweist, bereitgestellt. Bei dem Träger kann es sich insbesondere um einen Teil einer Karosserie handeln. Der Schweißbolzen kann beispielsweise wie vorstehend beschrieben ausgebildet sein. Anschließend wird der Schweißbolzen mit dem Träger mittels eines Schweißvorgangs befestigt. Vorzugsweise wird die Befestigung des Schweißbolzens mit dem Träger mittels eines vollautomatisierten Befestigungsprozesses durchgeführt, bei dem beispielsweise ein Schweißroboter, der einen Fügekopf mit einem Zuführschlauch aufweist, verwendet wird. Nach dem Befestigen des Schweißbolzens mit dem Träger wird die Scheibe auf den Schweißbolzen derart aufgebracht, dass die Scheibe auf dem stiftförmigen Abschnitt einrastet und auf dem stiftförmigen Abschnitt gehalten wird.

Gemäß einer bevorzugten Ausführungsform wird die Scheibe beim Aufbringen auf den Schweißbolzen über das Außengewinde des stiftförmigen Abschnitts geschoben. Daher ist die Scheibe vorzugsweise derart ausgebildet, dass sie mit ihrer Öffnung über das Außengewinde des stiftförmigen Abschnitts des Schweißbolzens bewegt werden kann.

Gemäß einer weiteren Ausführungsform weist der stiftförmige Abschnitt einen gewindefreien Bereich auf, der zwischen dem Flansch und dem Außengewinde angeordnet ist. Die Scheibe weist vorzugsweise Einrastmittel auf, die zum Aufschieben der Scheibe über das Außengewinde und zum Einrasten der Scheibe im gewindefreien Bereich ausgebildet sind. Insbesondere kann die Scheibe Einrastmittel aufweisen, wie sie vorstehend im Zusammenhang mit dem Befestigungssystem beschrieben worden sind.

Gemäß einer weiteren Ausführungsform wird der Schritt des Befestigens des Schweißbolzens auf dem Träger automatisiert, insbesondere vollautomatisiert, durchgeführt. Beispielsweise kann dabei zumindest ein Schweißroboter mit einem Fügekopf und einer verbundenen Versorgungseinrichtung und einem Zuführschlauch, welcher den Schweißbolzen automatisiert zuführt, zum Einsatz kommen.

Weitere Vorteile und vorteilhafte Ausführungsformen des hier beschriebenen Befestigungssystems ergeben sich aus den im Folgenden in Verbindung mit den Figuren 1 bis 5 beschriebenen Ausführungsformen. Es zeigen:
- Fig. 1: eine schematische Schnittansicht eines Schweißbolzens gemäß einem Ausführungsbeispiel,
- Fig. 2a und 2b: eine Scheibe in einer perspektivischen Darstellung und in einer Seitenansicht gemäß einem Ausführungsbeispiel,
- Fig. 3a bis 3c: Einrastmittel aufweisende Scheiben gemäß drei verschiedenen Ausführungsbeispielen,
- Fig. 4: ein an einem Träger befestigtes Befestigungssystem gemäß einem Ausführungsbeispiel, und
- Fig. 5: eine schematische Darstellung eines Verfahrens zum Herstellen eines Befestigungssystems gemäß einem weiteren Ausführungsbeispiel.

In den Ausführungsbeispielen und Figuren können gleiche oder gleich wirkende Bestandteile jeweils mit den gleichen Bezugszeichen versehen sein. Die dargestellten Elemente und deren Größenverhältnisse untereinander sind grundsätzlich nicht als maßstabsgerecht anzusehen. Vielmehr können einzelne Elemente, wie z.B. Schichten, Bauteile und Bereiche zur besseren Darstellbarkeit und/oder zum besseren Verständnis übertrieben dick oder groß dimensioniert dargestellt sein.

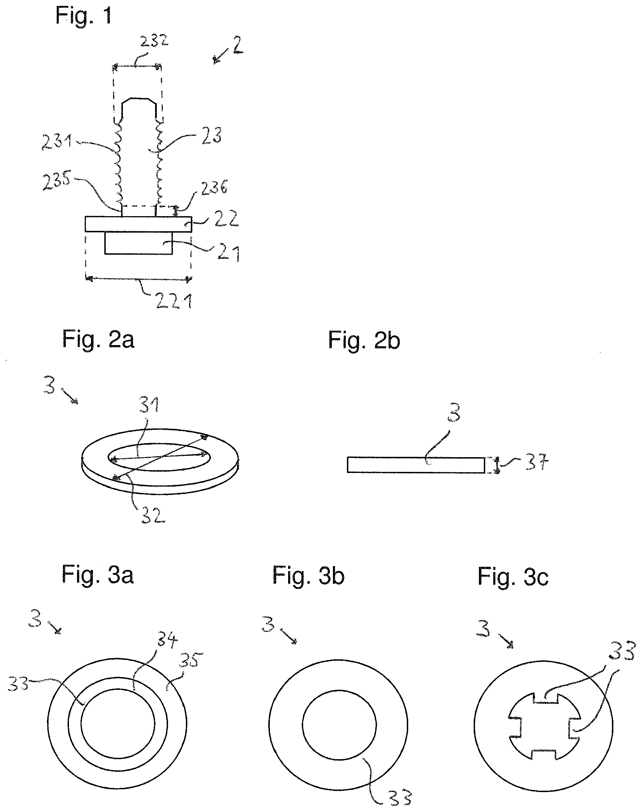

Figur 1 zeigt eine schematische Schnittansicht eines auf einen Träger aufschweißbaren Schweißbolzens 2. Der Schweißbolzen 2 umfasst einen Anschweißabschnitt 21 zum Anschweißen des Schweißbolzens 2 an einen Träger, einen Flansch 22 und einen stiftförmigen Abschnitt 23, welcher ein Außengewinde 231 umfasst. Zwischen dem Flansch 22 und dem Außengewinde 231 ist ein gewindefreier Bereich 235 angeordnet. Der Flansch 22 weist einen Durchmesser 221 auf. Der gewindefreie Bereich 235 weist eine Länge 236 in axialer Richtung auf, die dem Abstand des Flansches 22 zum Außengewinde 231 in axialer Richtung entspricht. Das Außengewinde 231 weist einen Durchmesser 232 auf, der den größten Durchmesser des stiftförmigen Abschnitts 23 in radialer Richtung, d.h. in einer zur axialen Richtung senkrechten Richtung, darstellt.

Figur 2a zeigt eine Scheibe 3 mit einer Öffnung 31 in einer perspektivischen Ansicht. Figur 2b zeigt die Scheibe aus Figur 2a in einer Seitenansicht. Die Scheibe 3 weist eine Dicke 37 auf. Die Öffnung 31 der Scheibe 3 weist einen Durchmesser 311, der auch als Innendurchmesser der Scheibe 3 bezeichnet werden kann, und einen Außendurchmesser 32 auf.

Die Figuren 3a bis 3c zeigen verschiedene Ausführungsbeispiele einer Scheibe 3 in Aufsicht. Die Scheibe 3 weist Einrastmittel 33 auf, die zum Aufschieben der Scheibe 3 über das Außengewinde 231 geeignet sind und mittels derer die Scheibe 3 im gewindefreien Bereich 235 des Schweißbolzens 2 einrasten kann.

Im Ausführungsbeispiel gemäß der Figur 3a weist die Scheibe einen Innenbereich 34 auf, der ein Kunststoffmaterial umfasst. Der Innenbereich 34 grenzt unmittelbar an die Öffnung 31 der Scheibe 3 an. Die Öffnung 31 der Scheibe 3 weist einen Durchmesser 311 von 6,0 mm auf. Alternativ kann die Scheibe 3 einen Durchmesser zwischen 5,0 mm und 7,0 mm aufweisen. Weiterhin weist die Scheibe 3 einen Außenbereich 35 auf, der ein Metall aufweist. Der Außenbereich 35 grenzt direkt an den Innenbereich 34 an. Mittels des das Kunststoffmaterial aufweisenden Innenbereichs 33 verfügt die Scheibe 3 über Einrastmittel 33, mittels derer die Scheibe über das Außengewinde 231 des Schweißbolzens 2 geschoben werden kann. Nach dem Schieben über das Außengewinde 231 rastet die Scheibe im gewindefreien Bereich 235 des Schweißbolzens 2 ein.

Gemäß dem Ausführungsbeispiel nach Figur 3b besteht die Scheibe 3 aus Kunststoff. Somit ist die Scheibe 3 verformbar, insbesondere elastisch verformbar. Der an die Öffnung angrenzende Bereich, der aus Kunststoff gebildet ist, funktioniert als Einrastmittel 33 wie oben beschrieben.

Die Scheibe 3 gemäß Ausführungsbeispiel der Figur 3c weist vorsprungartige Klemmabschnitte 36 auf, die in Richtung der Öffnung 31 in die Öffnung 31 hinein ragen. Mittels der vorsprungartigen Klemmabschnitte 36 kann die Scheibe 3 im gewindefreien Bereich 235 des Schweißbolzens 2 einrasten. Somit bilden die vorsprungartigen Klemmabschnitte 36 die Einrastmittel 33 der Scheibe.

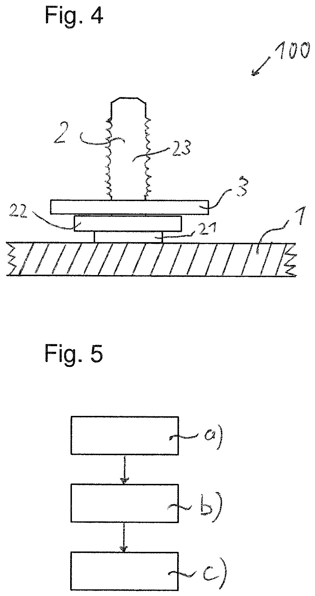

Figur 4 zeigt ein Befestigungssystem 100, das einen Schweißbolzen 2 und eine mit dem Schweißbolzen 2 verbundene Scheibe 3 umfasst, und mit einem Träger 1, der beispielsweise ein Karosserieteil sein kann, verbunden ist. In Figur 4 ist lediglich ein Ausschnitt des Trägers 1 gezeigt. Vorzugsweise weist die Scheibe 3 einen größeren Außendurchmesser 32 als der Durchmesser 221 des Flansches 22 auf. Dadurch kann ein großflächiges Widerlager für an den Befestigungssystemen zu befestigende Bauteile zur Verfügung gestellt werden.

Das hier beschriebene Befestigungssystem 100 zeichnet sich insbesondere auch dadurch aus, dass es einfach und kostengünstig herstellbar ist.

Figur 5 zeigt eine schematische Darstellung eines Verfahrens zur Herstellung eines Befestigungssystems 100. Das Verfahren umfasst zumindest die im Folgenden erläuterten Schritte a) bis c). Im Schritt a) werden ein Träger 1, ein Schweißbolzen 2 sowie eine Scheibe 3 mit einer Öffnung 31 bereitgestellt. Der Schweißbolzen 2 umfasst einen Flansch 22 und einen stiftförmigen Abschnitt 23, der ein Außengewinde 231 aufweist. Im Verfahrensschritt b) wird der Schweißbolzen 2 mittels eines Schweißvorgangs mit dem Träger 1 verbunden. Vorzugsweise weist der Schweißbolzen 2 einen Anschweißabschnitt 21 auf, mittels dessen der Schweißbolzen 2 mit dem Träger 1 verschweißt wird, so dass der Schweißbolzen 2 am Träger 1 befestigt ist und von diesem absteht, so dass sich der Schweißbolzen 2 zur Befestigung von Bauteilen am Träger 1 eignet. In einem dem Verfahrensschritt b) nachfolgenden Verfahrensschritt c) wird die Scheibe 3 auf den Schweißbolzen 2 derart aufgebracht, dass die Scheibe 3 auf dem stiftförmigen Abschnitt 23 einrastet und auf dem stiftförmigen Abschnitt 23 gehalten wird. Dabei wird die Scheibe 3 beispielsweise mit ihrer Öffnung über das Außengewinde 231 geschoben. Beispielsweise kann die Scheibe 3 je nach Bedarf im Karosseriebau oder in der Montage aufgebracht werden.

Vorzugsweise weist der stiftförmige Abschnitt 23 einen gewindefreien Bereich 235 auf, der zwischen dem Flansch 22 und dem Außengewinde 231 angeordnet ist und die Scheibe 3 weist Einrastmittel 33 auf, die zum Aufschieben der Scheibe 3 über das Außengewinde 231 ausgebildet sind und die zum Einrasten der Scheibe 3 im gewindefreien Bereich 235 dienen. Dadurch kann einerseits gewährleistet werden, dass die Scheibe 3 nach dem Befestigen des bereits mit dem Außengewinde 231 versehenen Schweißbolzens 2 am Träger 1 mit ihrer Öffnung 31 über das Außengewinde 231 bis zum gewindefreien Bereich 235 bewegt werden kann, und andererseits eine Verrastung der Scheibe 3 im gewindefreien Bereich 235 erzeugt werden, so dass die Scheibe 3 bei einer Drehung des Trägers 1 nicht vom stiftförmigen Abschnitt 23 des Schweißbolzens 2 fallen kann.

Der Schritt des Befestigens des Schweißbolzens 2 mit dem Träger 1 wird vorzugsweise automatisiert, insbesondere vollautomatisiert, durchgeführt, wobei beispielsweise ein Schweißroboter zum Einsatz kommen kann. Das Aufbringen der Scheibe 3 auf den Schweißbolzen 2 kann manuell erfolgen. Es ist jedoch auch denkbar, dass auch dieser Verfahrensschritt automatisiert durchgeführt wird, beispielsweise durch einen weiteren Roboter.

Die in den gezeigten Ausführungsbeispielen beschriebenen Merkmale können gemäß weiteren Ausführungsbeispielen auch miteinander kombiniert sein. Alternativ oder zusätzlich können die in den Figuren gezeigten Ausführungsbeispiele weitere Merkmale gemäß den Ausführungsformen der allgemeinen Beschreibung aufweisen.

### Bezugszeichenliste

- 1: Träger
- 100: Befestigungssystem
- 2: Schweißbolzen
- 21: Anschweißabschnitt
- 22: Flansch
- 221: Durchmesser des Flansches
- 23: stiftförmiger Abschnitt
- 231: Außengewinde
- 232: Durchmesser des Außengewindes
- 235: gewindefreier Bereich
- 236: Länge des gewindefreien Bereichs
- 3: Scheibe
- 31: Öffnung
- 311: Durchmesser der Öffnung
- 32: Außendurchmesser
- 33: Einrastmittel
- 34: Innenbereich
- 35: Außenbereich
- 36: Klemmabschnitt
- 37: Dicke der Scheibe
- a), b), c): Verfahrensschritt

## Patentansprüche

1. Befestigungssystem (100) umfassend einen auf einen Träger (1) aufschweißbaren Schweißbolzen (2) und eine an dem Schweißbolzen (2) befestigte, eine Öffnung (31) aufweisende Scheibe (3), wobei
- der Schweißbolzen (2) einen Anschweißabschnitt (21) zum Anschweißen des Schweißbolzens (2) an den Träger (1), einen Flansch (22) und einen ein Außengewinde (231) aufweisenden stiftförmigen Abschnitt (23) umfasst,
- die Scheibe (3) einen Außendurchmesser (32) aufweist, der größer als ein Durchmesser (221) des Flansches (22) ist,
- der stiftförmige Abschnitt (23) einen gewindefreien Bereich (235) aufweist, der zwischen dem Flansch (22) und dem Außengewinde (231) angeordnet ist, und
- die Scheibe (3) Einrastmittel (33) aufweist, die zum Aufschieben der Scheibe (3) über das Außengewinde (231) ausgebildet sind und mittels derer die Scheibe (3) im gewindefreien Bereich (235) eingerastet ist.

2. Befestigungssystem nach Anspruch 1, wobei die Einrastmittel (33) verformbar, insbesondere elastisch oder plastisch verformbar sind.

3. Befestigungssystem nach Anspruch 2, wobei das Außengewinde (231) einen größeren Durchmesser (232) aufweist als die Öffnung (31) der Scheibe (3).

4. Befestigungssystem nach einem der vorhergehenden Ansprüche, wobei die Scheibe (3) einen Innenbereich (34) und einen Außenbereich (35) aufweist, wobei der Innenbereich (34) ein Kunststoffmaterial aufweist und der Außenbereich (35) ein Metall aufweist.

5. Befestigungssystem nach einem der Ansprüche 1 bis 3, wobei die Scheibe (3) aus einem Kunststoffmaterial besteht.

6. Befestigungssystem nach einem der Ansprüche 1 bis 3, wobei die Scheibe (3) in Richtung der Öffnung (31) vorsprungartige Klemmabschnitte (36) aufweist.

7. Befestigungssystem nach einem der vorhergehenden Ansprüche, wobei der Anschweißabschnitt (21), der Flansch (22) und der stiftförmige Abschnitt (23) einstückig ausgebildet sind.

8. Befestigungssystem nach einem der vorhergehenden Ansprüche, wobei eine Länge (236) des gewindefreien Bereichs (235) größer oder gleich einer Dicke (37) der Scheibe (3) ist.

9. Befestigungssystem nach einem der vorhergehenden Ansprüche, wobei das Verhältnis vom Außendurchmesser (32) der Scheibe (3) zum Durchmesser (221) des Flansches (22) mindestens 1,5 beträgt.

10. Verfahren zur Herstellung eines Befestigungssystems (100) gemäß Anspruch 1, umfassend die folgenden Schritte:
a) Bereitstellen eines Trägers (1), eines Schweißbolzens (2), der einen Flansch (22) und einen ein Außengewinde (231) aufweisenden stiftförmigen Abschnitt (23) umfasst, sowie einer eine Öffnung (31) aufweisenden Scheibe (3),
b) Befestigen des Schweißbolzens (2) auf dem Träger (1) mittels eines Schweißvorgangs,
c) Anschließendes Aufbringen der Scheibe (3) auf den Schweißbolzen (2) derart, dass die Scheibe (3) auf dem stiftförmigen Abschnitt (23) einrastet und auf dem stiftförmigen Abschnitt (23) gehalten wird.

11. Verfahren nach Anspruch 10, wobei die Scheibe (3) im Verfahrensschritt c) über das Außengewinde (231) geschoben wird.

12. Verfahren nach einem der Ansprüche 10 oder 11, wobei der stiftförmige Abschnitt (23) einen gewindefreien Bereich (235) aufweist, der zwischen dem Flansch (22) und dem Außengewinde (231) angeordnet ist, und wobei die Scheibe (3) Einrastmittel (33) aufweist, die zum Aufschieben der Scheibe (3) über das Außengewinde (231) und zum Einrasten der Scheibe (3) im gewindefreien Bereich (235) ausgebildet sind.

13. Verfahren nach einem der Ansprüche 10 bis 12, wobei der Schritt des Befestigens des Schweißbolzens (2) auf dem Träger (1) automatisiert durchgeführt wird.

## Claims

1. A fastening system (100) comprising a welding stud (2) which can be welded onto a support (1), and a disc (3) which is fastened to the welding stud (2) and has an opening (31), wherein
- the welding stud (2) comprises a welding-on portion (21) for welding the welding stud (2) onto the support (1), a flange (22), and a pin-shaped portion (23) having an external thread (231),
- the disc (3) has an external diameter (32) which is greater than a diameter (221) of the flange (22),
- the pin-shaped portion (23) has a thread-free region (235) which is arranged between the flange (22) and the external thread (231), and
- the disc (3) has engagement means (33) which are designed for pushing the disc (3) over the external thread (231) and by means of which the disc (3) is engaged in the thread-free region (235).

2. A fastening system according to Claim 1, wherein the engagement means (33) are deformable, especially elastically or plastically deformable.

3. A fastening system according to Claim 2, wherein the external thread (231) has a greater diameter (232) than the opening (31) of the disc (3).

4. A fastening system according to one of the preceding claims, wherein the disc (3) has an inner region (34) and an outer region (35), the inner region (34) being of plastics material and the outer region (35) being of metal.

5. A fastening system according to one of Claims 1 to 3, wherein the disc (3) consists of a plastics material.

6. A fastening system according to one of Claims 1 to 3, wherein the disc (3) has projection-like clamping portions (36) in the direction of the opening (31).

7. A fastening system according to one of the preceding claims, wherein the welding-on portion (21), the flange (22) and the pin-shaped portion (23) are formed in one piece.

8. A fastening system according to one of the preceding claims, wherein a length (236) of the thread-free region (235) is greater than or equal to a thickness (37) of the disc (3).

9. A fastening system according to one of the preceding claims, wherein the ratio of the external diameter (32) of the disc (3) to the diameter (221) of the flange (22) is at least 1.5.

10. A method for producing a fastening system (100) according to Claim 1, comprising the following steps:
a) providing a support (1), a welding stud (2), which comprises a flange (22) and a pin-shaped portion (23) having an external thread (231), and a disc (3) having an opening (31),
b) fastening the welding stud (2) to the support (1) by means of a welding operation,
c) subsequently applying the disc (3) to the welding stud (2) such that the disc (3) engages on the pin-shaped portion (23) and is held on the pin-shaped portion (23).

11. A method according to Claim 10, wherein the disc (3) in method step c) is pushed over the external thread (231).

12. A method according to one of Claims 10 or 11, wherein the pin-shaped portion (23) has a thread-free region (235) which is arranged between the flange (22) and the external thread (231), and wherein the disc (3) has engagement means (33) which are designed for pushing the disc (3) over the external thread (231) and for engaging the disc (3) in the thread-free region (235).

13. A method according to one of Claims 10 to 12, wherein the step of fastening the welding stud (2) to the support (1) is carried out in automated manner.

## Revendications

1. Système de fixation (100) comprenant un boulon de soudage (2) pouvant être soudé sur un support (1) et un disque (3) fixé sur le boulon de soudage (2) et comportant une ouverture (31), système de fixation dans lequel :
- le boulon de soudage (2) comporte un segment soudé (21) permettant de le souder sur le support (1), une bride (22) et un segment (23) en forme de broche comportant un filetage externe (231),
- le disque (3) a un diamètre externe (32) qui est supérieur au diamètre (221) de la bride (22),
- le segment en forme de broche (23) comporte une zone (235) exempte de filetage qui est située entre la bride (22) et le filetage externe (231), et
- le disque (3) comporte des moyens d'encliquetage (33) qui sont réalisés pour permettre de faire coulisser le disque (3) sur le filetage externe (231), et par l'intermédiaire desquels ce disque (3) est encliqueté dans la zone (235) exempte de filetage.

2. Système de fixation conforme à la revendication 1, dans lequel les moyens d'encliquetage (33) sont déformables, en particulier déformables élastiquement ou plastiquement.

3. Système de fixation conforme à la revendication 2, dans lequel le filetage externe (231) a un diamètre (232) supérieur à celui de l'ouverture (31) du disque (3).

4. Système de fixation conforme à l'une des revendications précédentes, dans lequel le disque (3) comporte une zone interne (34) et une zone externe (35), la zone interne (34) renfermant un matériau synthétique et la zone externe (35) renfermant un métal.

5. Système de fixation conforme à l'une des revendications 1 à 3, dans lequel le disque (3) est réalisé en un matériau synthétique.

6. Système de fixation conforme à l'une des revendications 1 à 3, dans lequel le disque (3) comporte un segment de serrage (36) faisant saillie en direction de l'ouverture (31).

7. Système de fixation conforme à l'une des revendications précédentes, dans lequel le segment soudé (21), la bride (22) et le segment en forme de broche (23) sont réalisés en une seule pièce.

8. Système de fixation conforme à l'une des revendications précédentes, dans lequel la longueur (236) de la zone (235) exempte de filetage est supérieure ou égale à l'épaisseur (37) du disque (3).

9. Système de fixation conforme à l'une des revendications précédentes, dans lequel le rapport entre le diamètre externe (32) du disque (3) et le diamètre (221) de la bride (22) est égal au moins à 1,5.

10. Procédé de fabrication d'un système de fixation (100) conforme à la revendication 1, comprenant les étapes suivantes consistant à :
a) se procurer un support (1), un boulon de soudage (2), qui comporte un segment (23) en forme de broche comportant une bride (22) et un filetage externe (231), ainsi qu'un disque (3) comportant une ouverture (31),
b) fixer le boulon de soudage (2) sur le support (1) par un processus de soudure, puis,
c) mettre en place le disque (3) sur le boulon de soudage (2) de sorte que le disque (3) s'encliquette sur le segment (23) en forme de broche et soit maintenu sur le segment (23) en forme de broche.

11. Procédé conforme à la revendication 10, selon lequel lors de l'étape c) le disque (3) est déplacé par translation sur le filetage externe (231).

12. Procédé conforme à l'une des revendications 10 et 11, selon lequel le segment (23) en forme de broche comporte une zone exempte de filetage (235) qui est située entre la bride (22) et le filetage externe (231), et le disque (3) comporte des moyens d'encliquetage (33) qui sont réalisés pour permettre de déplacer le disque (3) par translation sur le filetage externe (231) et pour encliqueter ce disque (3) dans la zone (235) exempte de filetage.

13. Procédé conforme à l'une des revendications 10 à 12, selon lequel l'étape de fixation du boulon de soudage (2) sur le support (1) est mise en oeuvre de façon automatisée.
